# FASCICULE DE BREVET EUROPEEN

(11) **EP 1 869 959 B1**
(45) Date de publication et mention de la délivrance du brevet: **02.05.2012**
(21) Numéro de dépôt: 07358005.2
(22) Date de dépôt: 31.05.2007
(51) Int. Cl.: A01B 59/06

(54) **Porte-outils multifonctionnel se fixant en partie arrière d'un engin porteur**
Werkzeughalter mit mehreren Funktionen, der auf der Rückseite einer Trägermaschine befestigt wird
Multifunctional tool holder attaching to the rear of a vehicle

(30) Priorité: 19.06.2006 FR 0605427
(43) Date de publication de la demande: 26.12.2007
(73) Titulaire: PELLENC (Société Anonyme), 84120 Pertuis (FR)
(72) Inventeur: Pellenc, Roger, 84120 Pertuis (FR); Gialis, Jean-Marc, 84460 Cheval Blanc (FR)
(74) Mandataire: Marek, Pierre

(56) Documents cités:
- EP-A1- 0 312 126
- FR-A- 1 063 208
- FR-A1- 2 794 607
- US-A- 4 353 275

## Description

La présente invention concerne un porte-outils multifonctionnel se fixant en partie arrière d'un engin porteur. Selon une application particulièrement intéressante mais non exclusive, le porte-outils polyvalent selon l'invention est destiné à être fixé, de manière amovible, à l'arrière d'un tracteur agricole tel que, par exemple, un tracteur vigneron interligne.

En considérant l'application au domaine des matériels destinés à différents travaux agricoles, il existe, à l'heure actuelle, trois principes de fixation de châssis porte-outils sur les différents types de modèles de tracteurs:

### 1. La fixation trois points arrière :

De loin, la plus utilisée, elle reste la position favorite pour les constructeurs des divers matériels disponibles pour la viticulture ou l'arboriculture (par exemple : EP 0 312 126).

C'est aujourd'hui la seule fixation de série sur les tracteurs qui permette une adaptation assez rapide et surtout la plus standardisée sur les tracteurs tous modèles confondus.

Dans certains cas, la mobilité en direction verticale (haut bas) du trois points de fixation, est un inconvénient majeur surtout si le système est à simple effet et n'est pas prévu pour recevoir des efforts du bas vers le haut, ce qui oblige à faire certaines modifications qui consistent à bloquer la mobilité du trois points par des tirants rigides supplémentaires de verrouillage afin de garantir le maintien de position en toutes circonstances.

### 2. La fixation frontale

Cette position d'attelage (par exemple : FR-2.794.607) vient au second rang chez les constructeurs, après la fixation trois points arrière. Elle est tout de même très utilisée étant donné qu'elle se situe à l'avant du tracteur et, pour des raisons évidentes, cette position offre une grande visibilité des outils au travail avec un bon confort de conduite.

Néanmoins les inconvénients d'un tel positionnement sont multiples.

Le fait d'effectuer l'attelage d'un châssis porte-outil à l'avant du tracteur, c'est-à-dire sur la ferrure du pont avant, pose des problèmes de visibilité sur la route comme sur le terrain, qui sont de plus en plus difficiles à remédier vis-à-vis des nouvelles normes européennes de sécurité. De plus, il est important de réussir l'adaptation en intégrant toutes les contraintes du tracteur lui-même, c'est-à-dire veiller à ne pas obstruer la grille avant du capot moteur afin de permettre aux divers refroidisseurs de se ventiler normalement, déporter suffisamment le châssis en porte à faux vers l'avant afin de permettre l'ouverture du capot moteur en vue de l'entretien du tracteur sans être obligé de démonter le châssis porte-outil et faire attention de ne pas dépasser les charges critiques sur le pont avant et sur les fixations prévues par le constructeur qui sont parfois trop petites, surtout depuis la commercialisation des nouveaux systèmes de direction à quatre roues motrices avec petit rayon de braquage qui affine la partie avant du tracteur et laisse peu de place pour une fixation solide d'un porte-outils et/ou d'une machine.

### 3. La fixation latérale, gauche ou droite :

Cette position d'attelage appelée aussi attelage entre roues est le plus souvent utilisée pour l'adaptation d'outils de petite taille du genre outil de travail du sol.

Les points de fixation sur le tracteur ne sont pas nombreux et il est presque toujours nécessaire de concevoir un châssis sur mesure adapté au type de tracteur et à son constructeur. Ce montage n'est pas très économique car l'adaptation faite, en général, par les revendeurs reste chère car c'est du "sur mesure". Cette solution n'est pas du tout adaptée à une application multifonctionnelle. De plus, la position de fixation latérale sur le tracteur située entre roues avant et arrière, est utilisée pour les accès à la cabine du tracteur qui pour la plupart, sont aussi bien à droite qu'à gauche de celui-ci, ce qui pose certains problèmes avec l'adaptation d'outils en latéral, du genre la présence de marche pied d'accès ou bien d'ouverture des portes de la cabine du tracteur ou bien la sortie du pot d'échappement en positon basse sous le marche-pied de la cabine.

Ces difficultés ne sont pas insurmontables mais changent du tout au tout d'un modèle de tracteur à un autre, ce qui rend quasi impossible une adaptation industrielle des outils par l'intermédiaire d'un châssis à fixation latérale.

En résumé, il n'existe aujourd'hui aucun standard de fixation de châssis porte-outils que ce soit à l'avant, à l'arrière ou sur le côté droit ou gauche du tracteur. De plus, les dernières innovations sur les systèmes de direction des tracteurs quatre roues motrices rendent très difficile l'adaptation de châssis à fixation frontale, voire même parfois impossible.

L'attelage trois points arrière est actuellement la seule interface de série existante sur les tracteurs pouvant servir de fixation sans trop de spécificités entre les différents modèles. C'est pour cela que tous les outils divers et variés pour la viticulture ou l'arboriculture s'adaptent prioritairement sur le trois points arrière du tracteur et, par conséquent, le mobilisent pendant toute la durée d'accomplissement d'un travail déterminé nécessitant l'utilisation d'un outil spécifique. L'immobilisation du trois points arrière est un inconvénient significatif car, en effet, il interdit le montage simultané d'outils pour l'exécution de travaux combinés du genre travail du sol qui se fixent, eux aussi, en grande majorité, sur le trois points arrière du tracteur vigneron interligne.

Cette situation constitue un important obstacle aux souhaits des viticulteurs et des arboriculteurs qui cherchent à optimiser et à rentabiliser au maximum leurs parcs de machines et équipements ainsi que les travaux effectués à l'aide de ces derniers. C'est pour cela que le monde de la viticulture et de l'arboriculture est en continuelle attente de solutions permettant d'optimaliser les travaux effectués dans les vignobles et les vergers et, pour apporter une réponse à ce souhait général, le concept de "châssis porte-outils multifonctionnel" est devenu une priorité pour tous les grands constructeurs (voir, par exemple FR-2.817.112 et FR-2.817.114).

La présente invention se propose de mettre à la disposition des utilisateurs professionnels intéressés, un porte-outils multifonctionnel se fixant en partie arrière d'un engin porteur, en particulier' en partie arrière d'un tracteur agricole et de manière plus particulièrement intéressante d'un tracteur vigneron interligne, ce nouveau concept de porte-outils polyvalent autorisant l'utilisation concomitante du trois points arrière du tracteur, en toute liberté, sans démontage ou remontage dudit châssis et permettant des travaux combinés, le travail avec des outils latéraux (par exemple avec une prétailleuse du genre décrit dans le document FR-2.554.675), ou le travail avec des outils frontaux (par exemple avec une écimeuse deux demi-rangs).

Le porte-outil multifonctionnel selon l'invention comprend un châssis dont la partie basse est agencée pour permettre sa fixation amovible ou non et son positionnement en partie arrière d'un engin porteur, ce châssis comportant au moins un bâti porteur s'étendant vers le haut, en arrière du tracteur en situation de montage sur ce dernier, et au moins une structure porteuse munie d'une tête porte-outils disposée à l'extrémité libre de ladite structure de portage et agencée pour permettre la fixation interchangeable d'outils destinés à des travaux agricoles divers, cette structure de portage étant reliée à la partie supérieure dudit bâti et orientée vers l'avant en considérant le sens de déplacement de l'outil suspendu à ladite tête porte-outils, en cours de travail, ce porte-outils étant notamment remarquable en ce que ladite structure porteuse est agencée pour permettre, d'une part, des mouvements de la tête porte-outils dans trois directions, soit : verticalement (de haut en bas et réciproquement), latéralement (de gauche à droite et vice-versa), et longitudinalement (d'arrière vers l'avant et inversement), et ; d'autre part, le déplacement de ladite tête porte-outil et de l'outil suspendu à celle-ci, dans un espace situé à l'avant et/ou sur au moins l'un des côtés du tracteur.

Le châssis du porte-outils selon l'invention comporte des moyens de fixation permettant son montage, amovible ou non, sur un élément arrière fixe du châssis du tracteur, indépendant du système de fixation trois points arrière, et il est conformé de manière à dégager l'accès audit système de fixation trois points arrière dudit tracteur, lorsque le porte-outil est installé sur ce dernier.

De la sorte, le porte-outils multifonctionnel autorise la pleine utilisation du trois points arrière du tracteur qui reste libre pour le montage et l'utilisation concomitante ou non de tout outil ou machine combinatoire à celui de l'outil porté par ledit châssis porte-outils.

Ce porte-outils multifonctionnel a notamment pour avantage de permettre une parfaite visibilité que ce soit à l'avant, à l'arrière ou sur le côté gauche ou droit du tracteur ou autre engin porteur, de sorte à répondre au mieux aux normes européennes ou aux règles nationales en matière de circulation routière. En outre, il offre de multiples possibilités de travail que ce soit pour l'utilisation d'outils enjambeurs positionnés latéralement tels qu'une prétailleuse, ou pour utilisation d'outils interlignes tels qu'une écimeuse deux demi-rangs positionnée à l'avant du tracteur.

Selon un mode de réalisation avantageux, la tête porte-outils est assujettie à des moyens d'autopositionnement assurant l'auto-parallélisme de l'axe de travail de l'outil porté par ladite tête porte-outils avec l'axe du tracteur, en cours de travail, quelle que soit la position de ladite tête porte-outils par rapport au tracteur.

En outre, ce porte-outils peut être fixé de manière permanente à l'arrière du tracteur, sans nécessité de le démonter, à la fin d'un travail, en raison du fait qu'il ne gêne en rien l'utilisation du tracteur pour des travaux divers n'impliquant pas le montage d'un outil spécifique sur ledit porte-outils.

Suivant un mode de réalisation préféré, la structure porteuse est constituée par un bras de portage extensible orienté vers l'avant en considérant le sens de déplacement des outils portés par ledit châssis porte-outil, en cours de travail, ce bras de portage comportant une partie proximale fixée, au moyen d'une articulation à axes perpendiculaires en partie haute du bâti porteur du châssis de montage et au moins une partie mobile axialement et dont l'extrémité distale est munie de la tête porte-outil, le porte-outils comportant également des moyens assurant le pivotement dudit bras de portage extensible dans des directions perpendiculaires et des moyens assurant les mouvements d'avancée et de recul de la partie distale coulissante de ce dernier.

Selon un mode d'exécution avantageux, les moyens assurant le pivotement du bras de portage extensible dans un plan vertical ou sensiblement vertical sont constitués par un vérin fixé, par l'intermédiaire de l'une de ses extrémités et au moyen d'une articulation, au voisinage de la partie avant de la partie proximale fixe dudit bras de portage, et dont l'autre extrémité est agencée pour pouvoir être fixée, également au moyen d'une articulation, à un élément latéral fixe du châssis de l'engin porteur.

Selon un mode d'exécution préféré, le bras de portage extensible est constitué par une flèche télescopique et les moyens assurant les mouvements de rentrée et de sortie de l'élément coulissant dudit bras de portage sont constitués par un vérin logé à l'intérieur de ladite flèche télescopique et reliant la partie proximale pivotante et la partie distale coulissante de cette flèche télescopique.

Suivant un mode d'exécution intéressant, le porte-outils multifonctionnel selon l'invention comporte, à distance du bras de portage et latéralement par rapport à ce dernier, une ossature de renfort comprenant un bras supérieur de liaison fixé à la partie supérieure du bâti porteur et orienté vers l'avant, et un tirant rigide de fixation rattaché à l'extrémité avant dudit bras de liaison et dont l'extrémité inférieure est munie d'un système d'attache permettant de le fixer à un élément inférieur fixe du châssis d'un tracteur. De préférence, le bras supérieur de liaison de cette ossature de renfort est réglable en longueur et le tirant rigide est ajustable, ce dernier étant relié audit bras par une articulation à rotule et son système d'attache inférieur comprenant également une articulation à rotule.

Cette fixation complémentaire du porte-outils par tirant rigide a pour fonction d'assurer une bonne triangulation de fixation dudit porte-outils sur le tracteur afin de garantir une excellente rigidité de l'ensemble et de limiter considérablement les déformations qui pourraient être engendrées par le poids des outils attelés en bout du bras de portage.

Selon un autre exemple de construction, le porte-outils multifonctionnel comporte deux structures ou bras de portage indépendantes, distantes l'une de l'autre et supportées par le bâti porteur du châssis de montage.

Selon un autre mode de réalisation avantageux, la partie haute de l'élément porteur du châssis de montage du porte-outils multifonctionnel selon l'invention, est réalisée sous forme d'arceau à la partie supérieure duquel sont fixés, à distance, l'un de l'autre, le bras de portage et le bras de liaison de l'ossature de renfort ou suivant le cas, les deux bras de portage ou autres structures de portage.

De la sorte, ladite partie haute du bâti principal remplit, lorsque le châssis porte-outils est installé sur un tracteur, la fonction d'arceau de sécurité anti-renversement, et permet au constructeur dudit tracteur de faire l'économie du montage de l'arceau de sécurité obligatoire.

Les buts, caractéristiques et avantages ci-dessus, et d'autres encore, ressortiront mieux de la description qui suit et des dessins annexés dans lesquels :

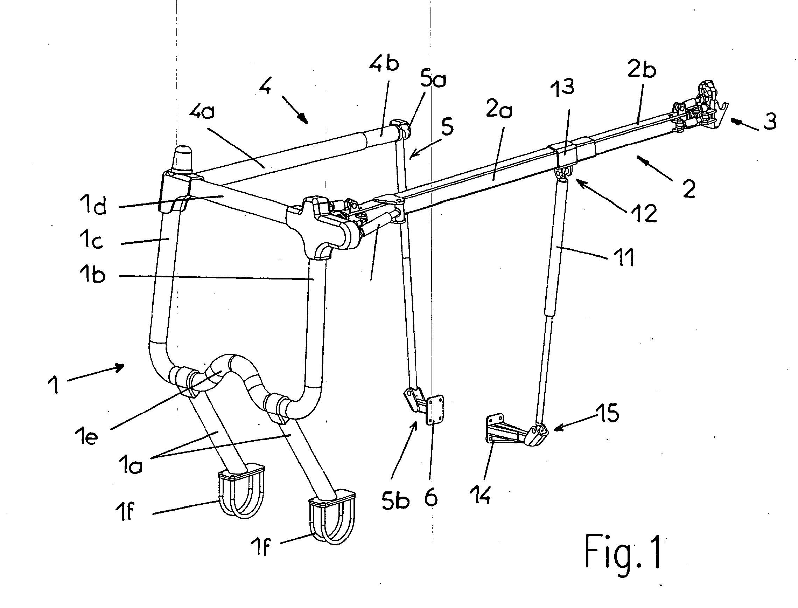

La figure 1 est une vue en perspective d'un exemple de réalisation du porte-outils multifonctionnel selon l'invention.
La figure 2 est une vue en perspective vue de l'avant montrant ce porte-outils installé sur un tracteur et sur la tête porte-outil duquel est monté un outil constitué par une machine de prétaillage.
La figure 3 est une vue de détail, en perspective et à plus grande échelle illustrant le système assurant la liaison articulée du bras de portage et du châssis porteur.
La figure 4 est une illustration en perspective, vue de l'arrière, de l'ensemble illustré à la figure 2.
La figure 5 est une vue de détail, en perspective, illustrant les moyens de fixation du châssis porteur sur un tracteur.

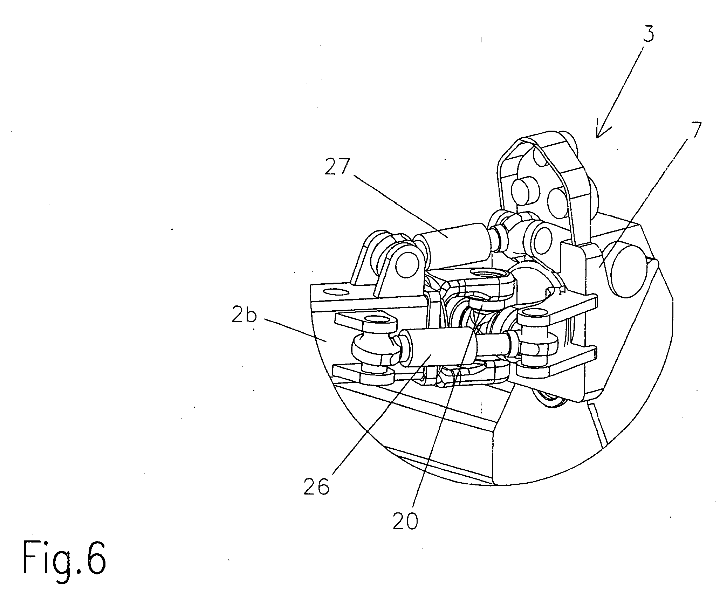

La figure 6 est une vue de détail, en perspective arrière, montrant la fixation d'un outil sur la tête porte-outils.
La figure 7 est une représentation en perspective, vue de l'arrière, d'une alternative de fixation du châssis du porte-outils sur le système de fixation à trois points d'un tracteur.
La figure 8 est une illustration en perspective, vue de l'avant, montrant l'utilisation du porte-outils selon l'invention pour le montage d'une écimeuse deux demi-rangs.
La figure 9 illustre cette même utilisation, par une vue en perspective arrière.
La figure 10 est une vue en perspective illustrant un premier mode de réalisation du système assurant l'auto-parallélisme de l'axe de travail de l'outil monté sur la tête porte-outil et de l'axe du tracteur, en cours de travail.
La figure 11 est une vue schématique de ce système électromécanique.
La figure 12 est une vue en perspective illustrant un deuxième mode de réalisation de ce système constitué par un dispositif électro-hydraulique.
La figure 13 est une vue schématique de ce système électro-hydraulique.
La figure 14 est une vue en perspective illustrant un troisième mode de réalisation du système d'auto-parallélisme.
La figure 15 est une vue schématique de ce système hydraulique.
La figure 16 est un schéma de détail de ce système.
La figure 17 est une vue en perspective illustrant un exemple de réalisation d'un dispositif pilotable manuellement pour assurer le parallélisme de l'axe de travail de l'outil monté sur la tête porte-outils et de l'axe du tracteur, en cours de travail.
Les figures 18 et 19 sont des schémas de détail de ce dispositif.
La figure 20 est une vue en perspective illustrant un deuxième mode d'exécution du porte-outils multifonctionnel selon l'invention.
La figure 21 est une vue en perspective d'un troisième mode d'exécution de ce porte-outils.

On se réfère auxdits dessins pour décrire des modes d'exécution avantageux, bien que nullement limitatifs, du porte-outils multifonctionnel selon l'invention.

Compte tenu de l'application particulièrement intéressante de l'invention aux travaux de viticulture ou d'arboriculture, celle-ci est décrite ci-après en association avec un tracteur agricole, mais on souligne encore que le porte-outils multifonctionnel décrit ci-après peut être monté sur différents types d'engins porteurs, incluant les tracteurs agricoles de différents modèles, notamment les tracteurs vignerons interlignes.

On précise cependant que l'équipement selon l'invention peut être installé sur des tracteurs à transmission mécanique, ou sur des tracteurs à transmission électro-mécanique, ou sur des tracteurs à transmission hydrostatique.

D'autre part, l'utilisation, dans l'exposé qui suit, de termes tels que "avant", "arrière", "supérieur", "inférieur", "haut(e)" ; "horizontal", "vertical" ou analogues, a été retenue pour simplifier la description, en considérant la position normale d'utilisation du porte-outils multifonctionnel, en cours de travail ; il est cependant évident que ces mots n'ont pas un caractère restrictif.

Le porte-outils multifonctionnel selon l'invention comprend un robuste châssis de montage 1 dont la partie basse 1a est agencée pour autoriser sa fixation rigide, amovible ou permanente, et un positionnement, en partie arrière d'un engin porteur tel qu'un tracteur vigneron interligne T, ou autre.

Ce châssis de montage 1 comporte au moins un bâti porteur s'étendant vers le haut, de préférence dans un plan vertical ou sensiblement vertical.

Selon le mode d'exécution illustré, ce bâti porteur comprend deux montants parallèles 1b, 1c distants l'un de l'autre et assemblés, à leur sommet, par une traverse supérieure 1 d et, à leur base, par une traverse inférieure 1e.

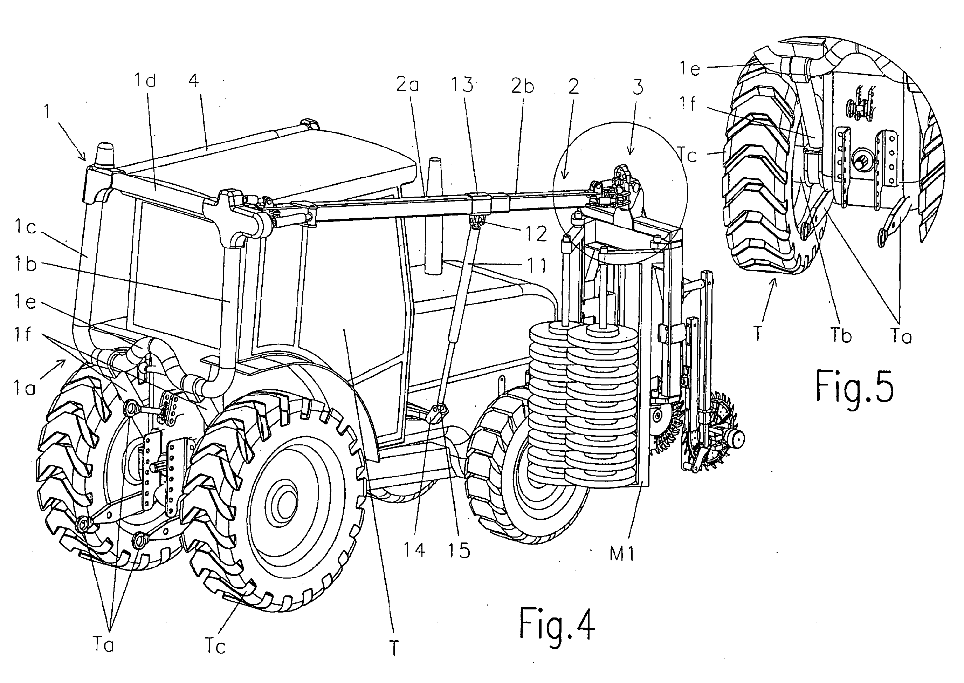

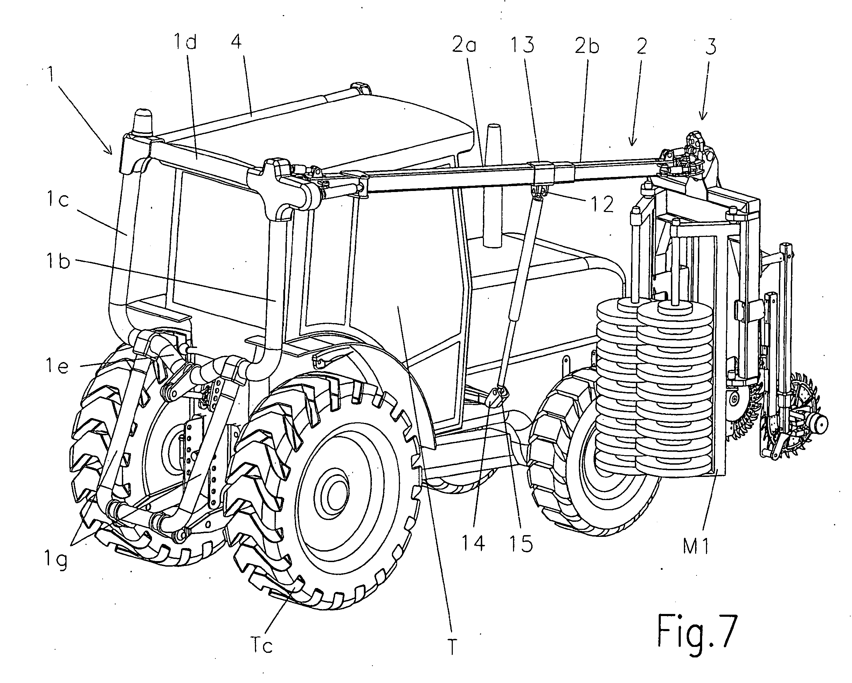

La traverse inférieure 1e est munie de pattes de fixation 1f ou 1g conformées pour permettre :
- soit le montage amovible du châssis 1 sur le bloc arrière du châssis du tracteur T ou sur les trompettes Tb des roues arrières Tc dudit tracteur (figures 4 et 5), ou sur le système de fixation trois points arrière Ta de ce dernier (figure 7) ;
- soit le montage permanent dudit châssis 1, directement sur ledit bloc arrière ou sur lesdites trompettes.

Bien entendu, dans le cas de fixation du châssis sur le trois points arrière du tracteur, le montage d'un autre outil sur les trois points arrière est nettement plus complexe.

Avantageusement, la partie basse 1e-1f ou 1e-1g du châssis 1 est conformée de manière à dégager l'accès au système de fixation trois points arrière Ta du tracteur, lorsque le porte-outil est installé en partie arrière de ce dernier, de sorte à permettre l'attelage et l'utilisation concomitants ou non de machines ou outils divers, par exemple d'outils de travail du sol.

D'autre part, la partie haute ou bâti porteur 1b-1c-1d du châssis de montage, réalisée comme indiquée ci-dessus, constitue un robuste arceau de protection limitant l'importance des dommages corporels ou matériels éventuels, en cas de renversement du tracteur.

En partie haute du bâti porteur, par exemple au niveau de la jonction des éléments 1b et 1d de celui-ci, est fixée, au moyen d'un dispositif d'articulation autour de deux axes perpendiculaires, une structure de portage qui, selon les exemples décrits et illustrés, est constituée par un bras de portage extensible 2 orienté vers l'avant en considérant le sens de déplacement des machines ou outils M1, M2 portées par la tête porte-outils 3 équipant l'extrémité libre ou extrémité distale dudit bras, en cours de travail. Autrement dit, le bras de portage extensible 2 est monté avec une aptitude de pivotement dans deux plans perpendiculaires, soit dans un plan vertical ou sensiblement vertical (vers le bas ou vers le haut), et dans un plan horizontal ou sensiblement horizontal (vers la droite ou vers la gauche).

Selon un mode d'exécution préféré, le bras extensible 2 est constitué d'au moins deux éléments tubulaires assemblés de manière télescopique, soit un élément proximal 2a relié au bâti porteur 1 b-1 d et un élément distal 2b logé avec une aptitude de coulissement à l'intérieur dudit élément proximal 2a et dont l'extrémité avant est équipée de la tête porte-outil 3.

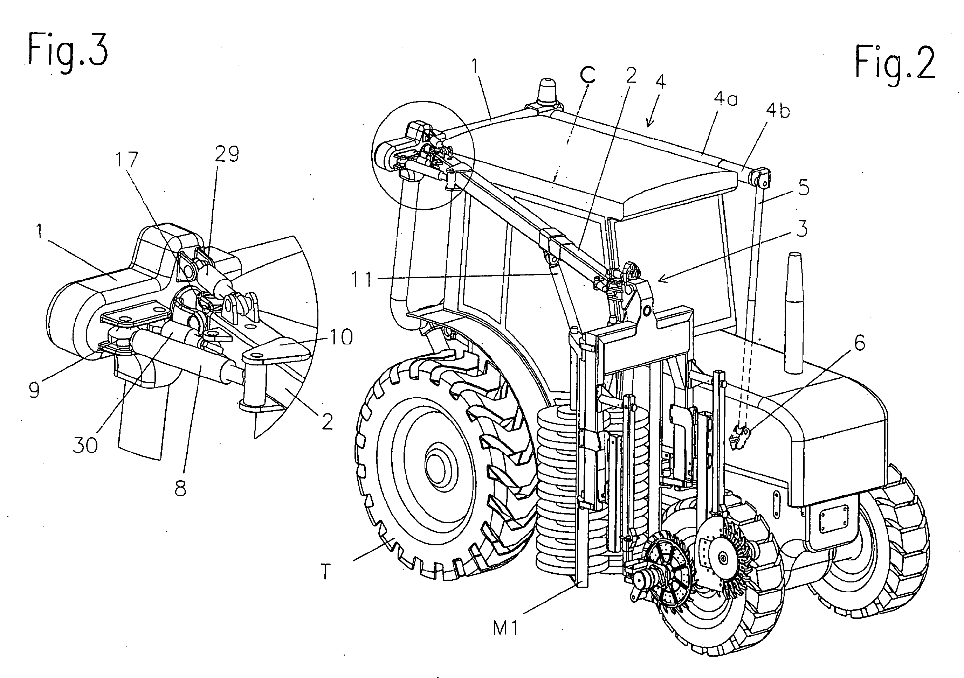

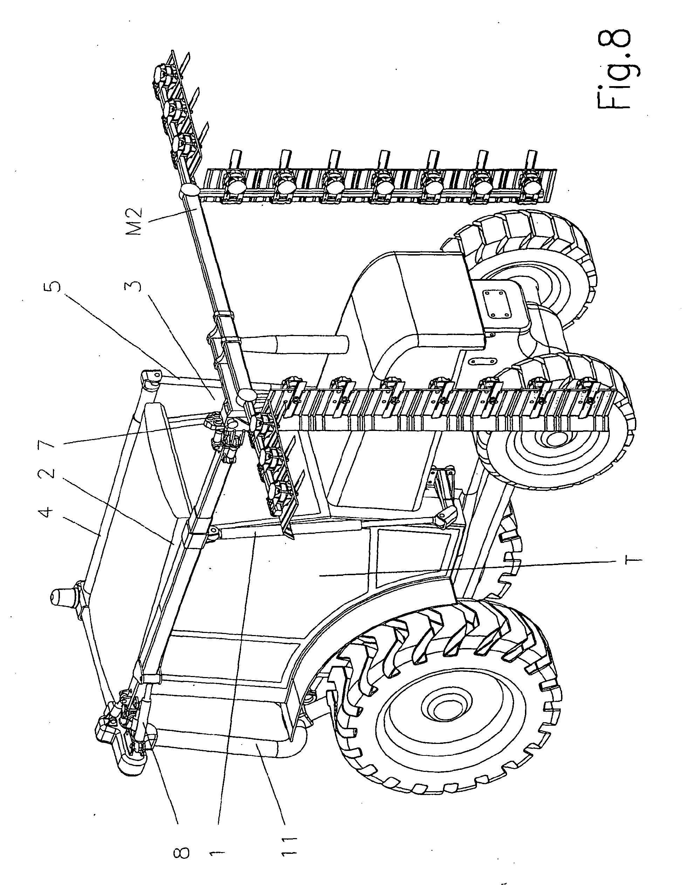

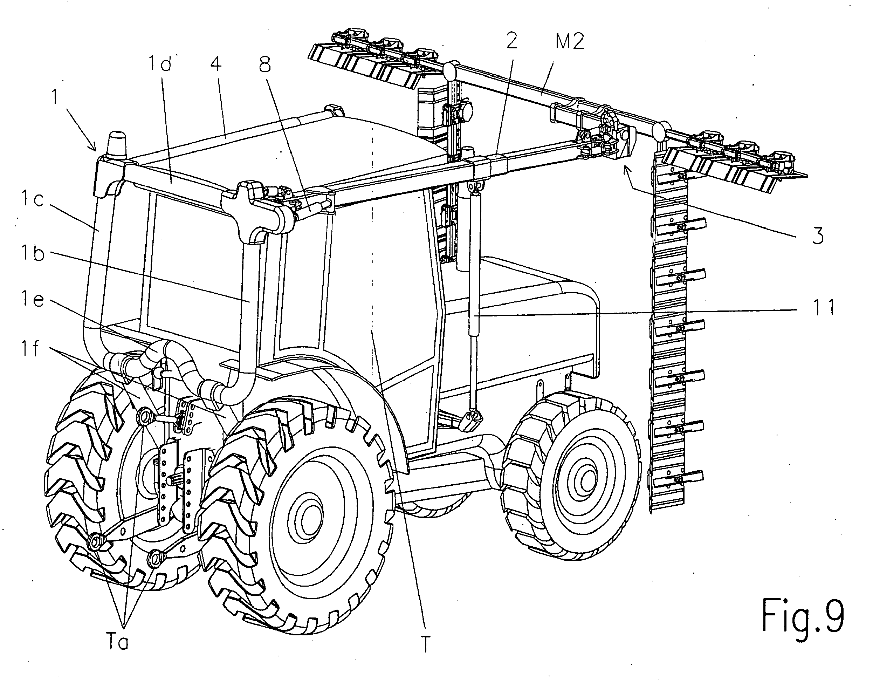

La tête porte-outil 3 est agencée pour autoriser la fixation commode, rapide et interchangeable d'outils destinés à des travaux agricoles divers tels que, par exemple, une prétailleuse M1 (figures 2, 4 et 7) ou une écimeuse deux demi-rangs M2 (figures 8 et 9), ou autres.

A distance du bras de portage 2 et latéralement par rapport à ce dernier, le porte-outil comporte une ossature de renfort comprenant, d'une part, un bras supérieur de liaison 4 fixé à la partie supérieure du bâti porteur 1b-1c-1d du châssis 1, par exemple à la jonction des éléments 1 c et 1d dudit bâti, et orienté vers l'avant et, d'autre part, un tirant rigide de fixation 5 rattaché à l'extrémité avant dudit bras de liaison et dont l'extrémité inférieure est munie d'un système d'attache 6 permettant de le fixer à un élément latéral inférieur fixe du châssis d'un tracteur.

De préférence, le bras de liaison 4 est réglable en longueur, ce bras étant, par exemple, constitué de deux éléments tubulaires 4a et 4b assemblés de manière télescopique. D'autre part, le tirant rigide 5 est ajustable et il est relié, au moyen d'articulations à rotule 5a, 5b, à l'extrémité avant du bras de liaison 4 et à son système d'attache 6, respectivement.

Le bras de portage 2 est conçu pour remplir trois fonctions principales :
- assurer l'interfaçage d'un outil ou machine M1, M2, ..., avec un tracteur, par l'intermédiaire de la tête porte-outils 3 ;
- permettre le positionnement d'un outil ou machine M1, M2, ..., en situation de travail ou de transport sur route, dans trois directions X, Y, Z perpendiculaires les unes aux autres ;
- garantir que l'axe de travail de l'outil ou de la machine M1, M2, ..., soit toujours orienté parallèlement à l'axe du tracteur, et ce, quelle que soit la correction faite sur les axes X, Y ou Z.

Le porte-outils selon l'invention comporte des moyens permettant de réaliser ces fonctions.

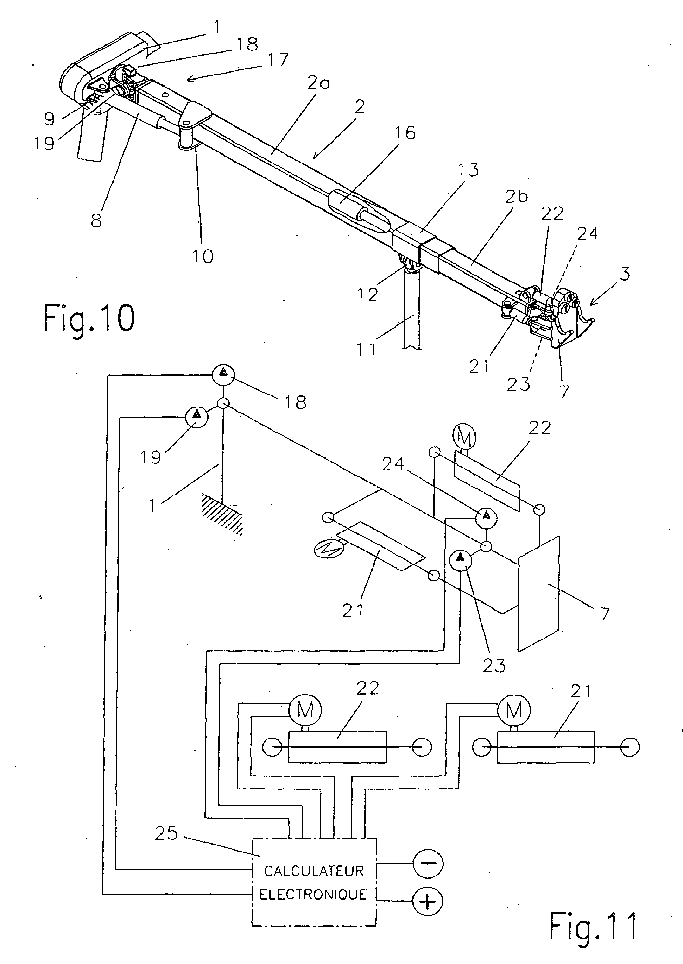

Un vérin 8 que l'on nommera "vérin de déport", par exemple constitué par un vérin hydraulique, est fixé, par l'intermédiaire de ses extrémités opposées et au moyen d'une articulation à rotule 9 et d'une articulation cylindrique 10, d'une part, à la partie supérieure du châssis rigide 1 et, d'autre part, à la partie proximale 2a du bras de portage 2 (figure 10). Ce vérin 8 assure le déplacement latéral dudit bras de portage dans un plan horizontal ou sensiblement horizontal, c'est-à-dire, vers la droite ou vers la gauche, et dans un espace situé sur le côté de la cabine C ou du poste de pilotage du tracteur T.

Un vérin 11 que l'on nommera "vérin de hauteur", par exemple constitué par un vérin hydraulique, est relié, par l'intermédiaire de l'une de ses extrémités et au moyen d'une articulation à rotule 12 à l'avant de la partie proximale 2a du bras de portage 2. Avantageusement, le vérin 11 est fixé sur la partie proximale 2a, par l'intermédiaire d'une bride de fixation 13 dont la position sur ladite partie proximale est réglable, l'immobilisation de cette bride de fixation à l'emplacement souhaitable étant obtenue par tout moyen de blocage approprié connu en soi (non représenté). Cette bride de fixation 13 a pour fonction de permettre un réglage de la position du vérin de hauteur 11 le long de l'axe du bras de portage 2, afin de s'adapter à toutes les configurations de tracteurs et de cabines de tracteurs possibles.

L'autre extrémité du vérin de hauteur 11 est agencée et/ou conformée pour pouvoir être fixée directement sur un élément latéral rigide du châssis d'un tracteur T. Avantageusement, l'extrémité inférieure du vérin de hauteur 11 est munie d'une patte de fixation 14 à laquelle elle est reliée au moyen d'une articulation à rotule 15.

Le vérin de hauteur 11 assure le déplacement du bras de portage 2 dans un plan vertical ou sensiblement vertical, c'est-à-dire, vers le haut ou vers le bas.

La fixation du vérin de hauteur 11 par l'intermédiaire d'articulations à rotule 12, 15 autorise un auto-alignement dudit vérin en fonction de la position du bras de portage 2 dans les plans vertical et horizontal.

Le fait de fixer le vérin de hauteur 11 directement sur le tracteur T est un avantage particulièrement important, car si on procède à l'étude statique du bras de portage complet constitué des éléments 2a, 2b, 3 et de l'outil M1 ou M2, ..., suspendu à la tête porte-outil 3, on s'aperçoit que la triangulation des efforts est très favorable à une bonne tenue mécanique dudit bras de portage et à une très bonne rigidité de l'ensemble, surtout lorsque le porte-outils est utilisé pour le montage frontal d'un outil ou machine telle qu'une écimeuse deux demi-rangs M2 (figures 8 et 9). Cet agencement permet d'avoir une structure de châssis porteur 1 beaucoup plus légère et donc beaucoup plus facilement positionnable rigidement sur la partie arrière du tracteur. De plus, les efforts de fixation de l'ensemble châssis principal 1 et de l'ensemble bras de portage 2-3 sur le tracteur T, sont mieux répartis, car le vérin de hauteur 11 en absorbe une grande partie directement sans passer par une structure de châssis lourde.

Un vérin 16 que l'on nommera "vérin de coulisse" relie, par l'intermédiaire de ses extrémités opposées, la partie proximale 2a et la partie distale 2b du bras de portage 2. De préférence, ce vérin de coulisse est logé à l'intérieur du bras de portage télescopique 2. Il assure le déplacement longitudinal de la partie distale coulissante 2a de ce dernier équipée de la tête porte-outils 3, , c'est-à-dire vers l'avant ou vers l'arrière.

Afin de garantir que l'axe de travail de l'outil M1 ou M2 suspendu à la tête porte-outils 3 soit toujours parallèle à l'axe du tracteur T, et ce quelle que soit la position de ladite tête porte-outils obtenue par les vérins 8, 11 et 16, dans les directions X, Y, Z, respectivement, le porte-outils multifonctionnel selon l'invention est pourvu d'un dispositif assurant la fonction d'un parallélogramme déformable double dans les plans horizontal et vertical. Pour cela, les extrémités du bras de portage 2 sont assujetties à un système d'asservissement comprenant des moyens de détection des déplacements angulaires dudit bras de portage autour de ses axes d'articulation perpendiculaires, et des moyens assurant l'auto-positionnement de la tête porte-outils 3 en fonction des mouvements dudit bras décelés par lesdits moyens de détection.

Plusieurs modes de mise en oeuvre de ce système de double parallélogramme déformable virtuel sont possibles et décrits ci-après.

Selon les figures 10 et 11, l'extrémité proximale du bras de portage 2 constitué par les éléments 2a, 2b, est fixée, par l'intermédiaire d'une liaison à double articulation, par exemple d'une liaison à cardan 17, en partie haute du châssis porteur 1, afin d'autoriser seulement deux degrés de liberté de rotation permettant le déplacement dudit bras dans deux plans perpendiculaires. Deux capteurs angulaires sont fixés sur les axes du cardan 17 ou autre dispositif de liaison à double articulation. Un capteur 18 est fixé sur l'axe du cardan permettant la rotation du bras de portage 2 dans un plan horizontal et donc assurant la liberté de déplacement de l'outil M1 ou M2 dans la direction X ; le second capteur 19 est fixé sur l'axe du cardan permettant la rotation du bras de portage dans un plan vertical et donc assurant la liberté de déplacement de l'outil M1 ou M2 dans un plan Y.

L'extrémité distale du bras de portage 2 est reliée également par une liaison à double articulation, par exemple une liaison à cardan 20 à la ferrure d'attelage rapide 7 constituant la pièce essentielle de la tête porte-outils 3. Deux petits vérins électriques 21, 22 reliant également ladite extrémité distale et ladite ferrure d'attelage rapide 7, sont asservis, par l'intermédiaire de deux capteurs angulaires 23, 24 situés sur les deux axes du cardan 20 de fixation de la ferrure d'attelage rapide 7 et d'un calculateur électronique 25, en boucle d'asservissement de recopie des angles mesurés par les capteurs angulaires 18 et 19, afin de garantir que l'axe de position de la ferrure d'attelage rapide 7 et donc de l'outil M1 ou M2 suspendu à celle-ci, soit toujours parallèle à l'axe du tracteur T.

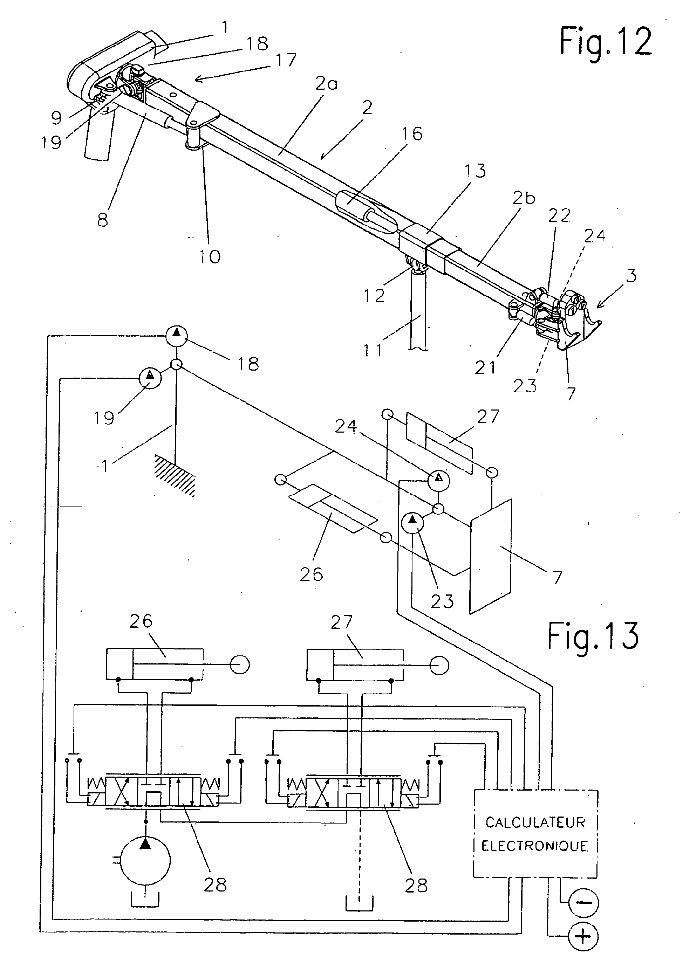

Le mode d'exécution illustré par les figures 12 et 13 diffère du précédent en ce que les vérins 26 et 27 assurant l'orientation de la ferrure d'attelage rapide 7, sont constitués par des vérins hydrauliques ou pneumatiques à double effet et sont asservis, par l'intermédiaire des capteurs angulaires 23, 24 situés sur les deux axes du cardan 20 (ou autre dispositif de liaison à double articulation) de fixation de la ferrure d'attelage rapide 7 à l'extrémité distale du bras de portage 2, du calculateur électronique 25 et de deux électrodistributeurs, ou servodistributeurs ou servovalves 28, en boucle d'asservissement de recopie des angles mesurés par les capteurs angulaires 18 et 19. Ce mode d'exécution permet également de garantir que l'axe de position de la ferrure d'attelage rapide et donc de l'outil M1 ou M2 soit toujours parallèle à l'axe du tracteur T.

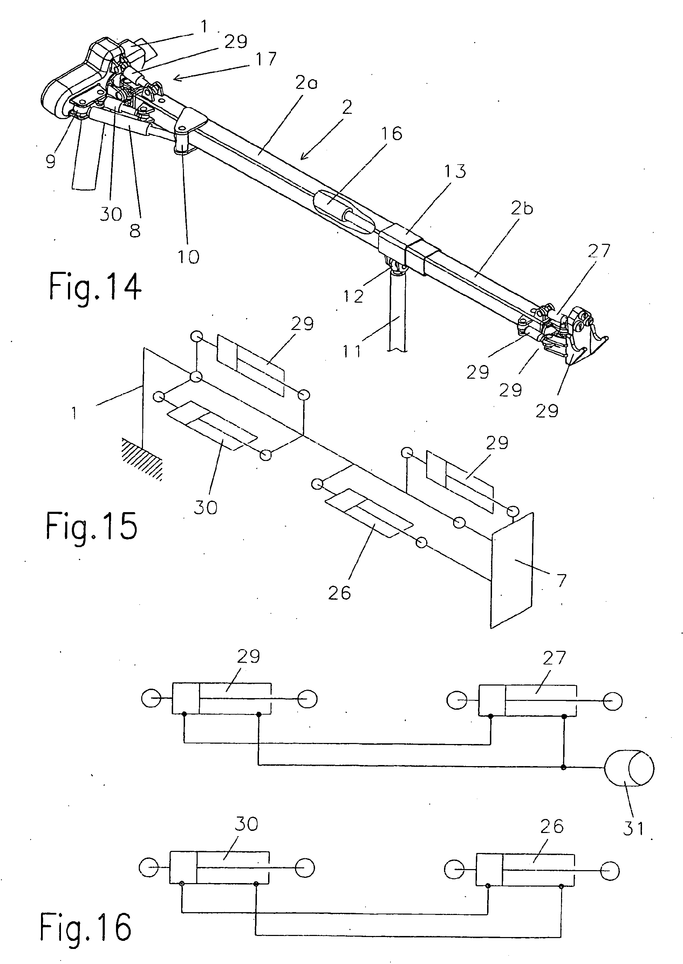

Selon le mode de réalisation illustré par les figures 14, 15, 16, l'auto-positionnement de la ferrure d'attelage rapide est obtenu au moyen d'un double parallélogramme hydraulique volumétrique. Le porte-outils 3 est relié à l'extrémité distale du bras de portage 2 par une liaison à double articulation, par exemple, par une liaison à cardan 20 et par deux petits vérins hydrauliques à double effet 26 et 27, comme indiqué précédemment. D'autre part, l'extrémité proximale du bras de portage 2 est reliée à la partie haute du châssis 1 au moyen d'une liaison à double articulation, par exemple, par une liaison à cardan 17 et de deux petits vérins hydrauliques à double effet 29 et 30 placés de sorte que l'un (29) se trouve actionné par les mouvements d'extension ou de rétraction du vérin de hauteur 11, c'est-à-dire par les mouvements du bras dans un plan vertical ou sensiblement vertical, tandis que l'autre (30) est actionné par les mouvements d'allongement ou de rétraction du vérin de déport 8, c'est-à-dire par les mouvements du bras dans un plan horizontal ou approximativement horizontal.

La compression du vérin 29, par exemple par suite d'un pivotement vers le haut du bras de portage 2, entraîne un transfert d'huile dans l'une des chambres du vérin 27 et l'allongement de ce dernier entraînant un mouvement de pivotement vers le bas de la ferrure d'attelage rapide 7 qui reste orientée verticalement, et vice-versa. La compression du vérin 30, par exemple par suite d'un pivotement à droite du bras de portage 2, entraîne un transfert d'huile dans l'une des chambres du vérin 26 et l'allongement de celui-ci entraînant un mouvement de pivotement vers la gauche de la ferrure d'attelage rapide 7 dont l'axe de position et donc l'axe de l'outil M1 ou M2 suspendu à ladite ferrure, restent parallèles à l'axe du tracteur.

On comprend que chaque transfert d'huile, par exemple du vérin 29 vers le vérin 27 est à double effet. En effet, le transfert d'huile est double afin de maintenir le fonctionnement du parallélogramme hydraulique déformable, quel que soit le sens des efforts générés par la gravité ou par l'outil au travail. Les vérins 29 et 27 assurent le fonctionnement du parallélogramme dans le plan vertical ou sensiblement vertical, tandis que les vérins 30 et 26 assurent le fonctionnement du parallélogramme dans le plan horizontal ou sensiblement horizontal.

Un accumulateur oléopneumatique 31, par exemple connecté au vérin 27 (figure 16a), côté tige, c'est-à-dire du côté ou la pression hydraulique s'oppose au sens d'avancement de l'outil M1 ou M2, en condition de travail normal, assure la fonction de sécurité hydraulique en fonction de la pression de gonflage Po de l'accumulateur qui règle la force de résistance dudit vérin du parallélogramme hydraulique.

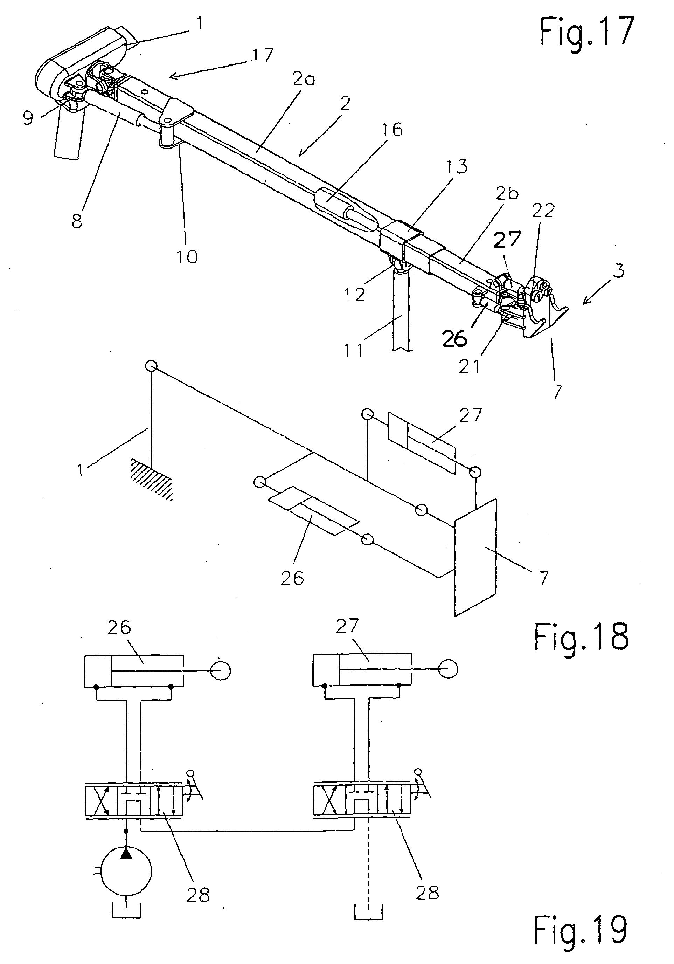

Selon un autre mode d'exécution illustré aux figures 17, 18 et 19, des moyens permettant d'assurer le parallélisme de l'axe de travail de l'outil M1 ou M2 suspendu à la tête porte-outils 3 avec l'axe du tracteur T sont pilotables manuellement. Dans ce cas, deux vérins orthogonaux 26, 27 relient l'extrémité distale du bras de portage 2 et la ferrure d'attelage rapide 7 de la tête porte-outils 3, ces vérins étant pilotables manuellement par l'intermédiaire de deux électrodistributeurs, ou servodistributeurs ou servovalves 28.

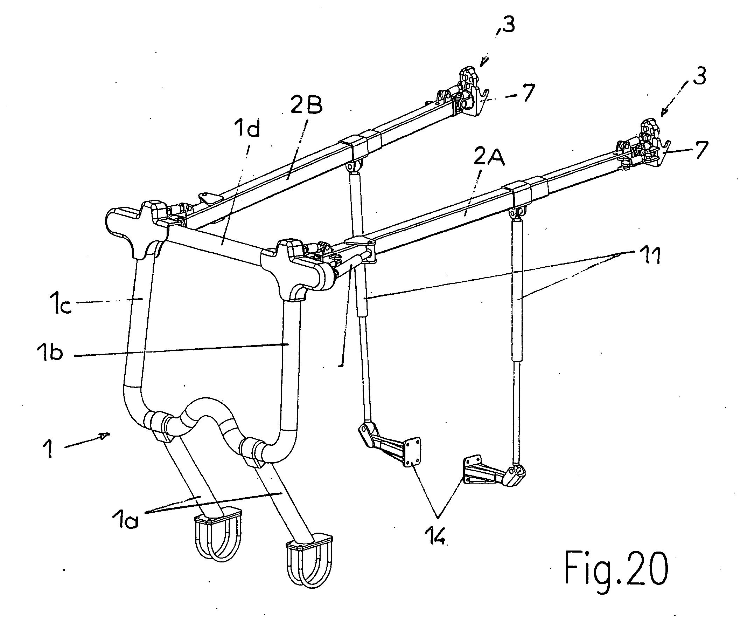

Selon le mode d'exécution illustré à la figure 20, le porte-outils multifonctionnel selon l'invention comporte deux structures de portage ou bras de portage indépendants 2A, 2B, distants l'un de l'autre et supportés par le bâti porteur 1b-1c-1d du châssis de montage 1. Ces bras de portage 2A, 2B sont conformés et équipés de manière semblable au bras de portage 2 précédemment décrit, et ils sont, par exemple, fixés au niveau de la jonction des éléments 1b, 1d ou 1c, 1d, respectivement, du bâti porteur, de la façon décrite ci-dessus. Ces bras de portage indépendants 1A, 2B peuvent se déplacer latéralement dans des espaces situés sur les côtés droit ou gauche, respectivement, de la cabine C ou du poste de pilotage du tracteur lorsque le porte-outils est monté sur un tel véhicule porteur.

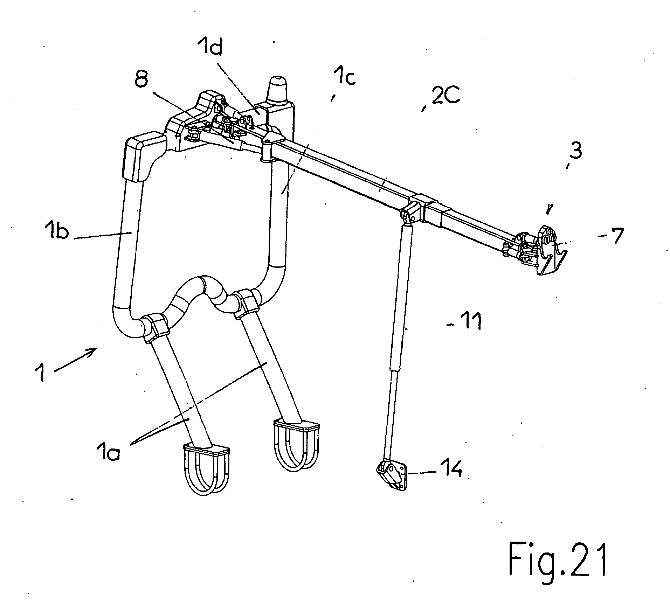

Selon le mode d'exécution représenté à la figure 21, l'unique bras de portage 2C du porte-outils multifonctionnel selon l'invention, est fixé dans la partie médiane de la traverse supérieure 1d du bâti porteur 1b-1c-1d du châssis de montage 1. Dans ce cas, ce bras de portage 2C peut se déplacer latéralement, dans un espace situé au-dessus de la cabine C ou du poste de pilotage du tracteur, lorsque le porte-outils est monté sur un tracteur.

## Revendications

1. Porte-outils multifonctionnel se fixant en partie arrière d'un engin porteur, par exemple à l'arrière d'un tracteur agricole, comprenant un châssis de montage (1) dont la partie basse (1a-1e) est agencée pour permettre sa fixation amovible ou non et son positionnement sur un élément arrière fixe du châssis d'un engin porteur (T), indépendant du système de fixation trois points arrière dudit engin porteur (T), et il est conformé de manière à dégager l'accès audit système de fixation trois points arrière de l'engin porteur, lorsque le porte-outils est installé sur ce dernier, ce châssis de montage (1) comportant au moins un bâti porteur (1b-1c-1d) s'étendant vers le haut, en arrière du tracteur en situation de montage sur ce dernier, et au moins une structure de portage (2) munie d'une tête porte-outils (3) disposée à l'extrémité libre de ladite structure de portage (2) et agencée pour permettre la fixation interchangeable d'outils (M1, M2) destinés à des travaux agricoles divers, cette structure de portage (2) étant reliée à la partie supérieure dudit bâti et orientée vers l'avant en considérant le sens de déplacement de l'outil (M1, M2) suspendu à ladite tête porte-outils (3), en cours de travail, ladite structure de portage (2) étant agencée pour permettre, d'une part, des mouvements de la tête porte-outils (3) dans trois directions, soit : verticalement (de haut en bas et réciproquement), latéralement (de gauche à droite et vice-versa), et longitudinalement (d'arrière vers l'avant et inversement), et: d'autre part, le déplacement de ladite tête porte-outil (3) et de l'outil (M1, M2) suspendu à celle-ci, dans un espace situé à l'avant et/ou sur au moins l'un des côtés du tracteur.

2. Porte-outils multifonctionnel selon la revendication 1, **caractérisé en ce que** la tête porte-outils (3) est assujettie à des moyens assurant l'auto-parallélisme de l'axe de travail de l'outil (M1, M2) porté par ladite tête porte-outils (3) avec l'axe du tracteur (T).

3. Porte-outils multifonctionnel suivant la revendication 1, **caractérisé en ce que** la tête porte-outil (3) est assujettie à deux vérins orthogonaux pilotables manuellement et installés à l'avant de la structure de portage (2), ces vérins permettant d'assurer le parallélisme de l'axe de travail de l'outil (M1, M2) porté par ladite tête porte-outils (3) avec l'axe du tracteur (T).

4. Porte-outil multifonctionnel selon l'une quelconque des revendications 1 à 3, **caractérisé en ce qu'**il comporte deux structures ou bras de portage (2) indépendantes distantes l'une de l'autre et, supportées par l'élément porteur (1b, 1 c, 1d) du châssis de montage (1).

5. Porte-outils multifonctionnel selon l'une quelconque des revendications 1 à 4, **caractérisé en ce que** la partie basse (1a-1e) du châssis de montage (1) est conformée de manière à dégager l'accès au système de fixation trois points arrière (Ta), lorsque le porte-outils est installé sur un tracteur (T) équipé d'un tel système de fixation.

6. Porte-outils multifonctionnel suivant l'une quelconque des revendications 1 à 5, **caractérisé en ce que** la structure porteuse comprend un bras de portage (2) comportant une partie proximale (2a) fixée, au moyen d'une articulation à axes perpendiculaires (17) en partie haute dudit élément porteur (1b-1c-1d) et au moins une partie mobile axialement (2b) et dont l'extrémité distale est munie d'une tête porte-outil (3), ladite tête porte-outils comportant également des moyens (8, 11) assurant le pivotement dudit bras de portage télescopique (2) dans des directions perpendiculaires et des moyens (16) assurant les mouvements vers l'avant ou vers l'arrière de la partie coulissante (2b) de ce dernier.

7. Porte-outils multifonctionnel selon la revendication 6, **caractérisé en ce que** le ou les bras de portage (2) peut ou peuvent se déplacer latéralement dans un espace situé sur le côté de la cabine (C) ou du poste de pilotage du tracteur (T).

8. Porte-outils multifonctionnel suivant la revendication 6, **caractérisé en ce que** le bras ou les bras de portage (2) peu(ven)t se déplacer latéralement dans un espace situé au-dessus de la cabine (C) ou du poste de pilotage du tracteur (T).

9. Porte-outils multifonctionnel suivant l'une quelconque des revendications 6 à 8, **caractérisé en ce que** les moyens assurant le pivotement du bras de portage extensible (2) dans un plan vertical ou sensiblement vertical sont constitués par un vérin de hauteur (11) fixé, par l'intermédiaire de l'une de ses extrémités et au moyen d'une articulation (12) au voisinage de l'extrémité distale de la partie de fixation pivotante (2a) dudit bras de portage (2), et dont l'autre extrémité est agencée pour pouvoir être fixée, également au moyen d'une articulation (15), à un élément latéral fixe du châssis de l'engin porteur (T).

10. Porte-outiis multifonctionnel selon la revendication 9, **caractérisé en ce que** le vérin de hauteur (11) est fixé sur une bride (13) à position réglable montée sur la partie proximale pivotante (2a) du bras de portage (2).

11. Porte-outils multifonctionnel suivant l'une des revendications 9 ou 10, **caractérisé en ce que** le vérin de hauteur (11) est relié au bras de portage (2) et à une attache (14) de fixation à un élément latéral fixe du châssis de l'engin porteur, au moyen d'articulations à rotule (12, 15).

12. Porte-outils multifonctionnel selon l'une quelconque des revendications 1 à 11, **caractérisé en ce que** le bras de portage extensible (2) est constitué par une flèche télescopique et les moyens assurant les mouvements de rentrée et de sortie de l'élément coulissant (2b) dudit bras de portage comprennent un vérin (16) logé à l'intérieur de ladite flèche télescopique et reliant la partie proximale pivotante (2a) et la partie distale coulissante (2b) de cette dernière.

13. Porte-outils multifonctionnel selon l'une quelconque des revendications 1 à 3, et 5 à 12, **caractérisé en ce qu'**il comporte, à distance du bras de portage (2) et latéralement par rapport à ce dernier, une ossature de renfort (4) comprenant un bras supérieur de liaison (4a-4b) orienté vers l'avant et un tirant rigide de fixation (5) rattaché à l'extrémité avant dudit bras de liaison et dont l'extrémité inférieure est munie d'un système d'attache (6) permettant de le fixer à un élément latéral inférieur fixe du châssis d'un tracteur.

14. Porte-outils multifonctionnel suivant la revendication 13, **caractérisé en ce**
**que** le bras supérieur de liaison (4) de l'ossature de renfort est extensible, ce bras étant, par exemple, constitué de deux éléments tubulaires (4a, 4b) assemblés de manière télescopique, et/ou en ce que le tirant rigide de fixation (5) est ajustable.

15. Porte-outils multifonctionnel selon l'une des revendications 13 ou 14, **caractérisé en ce que** le tirant rigide de fixation (5) est relié au bras supérieur (4a-4b) et à son système d'attache inférieur (6), au moyen d'articulations à rotule (5a, 5b).

16. Porte-outils multifonctionnel suivant l'une quelconque des revendications 1 à 15, **caractérisé en ce que** la partie haute (1b, 1c, 1d) du châssis de montage (1) est réalisée sous forme d'arceau anti-renversement à la partie supérieure duquel sont fixés, à distance l'un de l'autre, le bras de portage supérieure (2) et le bras supérieur de liaison (4) de l'ossature de renfort ou les deux bras de portage (2A, 2B).

17. Porte-outils multifonctionnel selon l'une quelconque des revendications 6 à 12, **caractérisé en ce que** les extrémités du bras de portage (2) sont assujetties à un système d'asservissement comprenant des moyens de détection (18, 19 ; 29, 30) des déplacements angulaires dudit bras de portage autour de ses axes d'articulation en partie haute du châssis (1), et des moyens (21, 22 ; 26, 27) assurant l'auto-positionnement de la tête porte-outil (3) en fonction des mouvements dudit bras décelés par lesdits moyens de détection.

18. Porte-outils multi-fonctionnel suivant la revendication 17, **caractérisé en ce que** l'extrémité proximale du bras de portage (2) est fixée à la partie haute du châssis-porteur (1) par l'intermédiaire d'une liaison à double articulation, par exemple d'une liaison à cardan (17), dont les axes perpendiculaires sont munis, chacun, d'un capteur angulaire (18, 19), et **en ce que** l'extrémité distale dudit bras de portage est reliée à la tête porte-outils (3) par l'intermédiaire d'une liaison à double articulation, par exemple d'une liaison à cardan (20), deux vérins électriques (21, 22) reliant également ladite extrémité distale et ladite tête porte-outils, ces vérins étant asservis, par l'intermédiaire de deux capteurs angulaires (23, 24) situés sur les deux axes du cardan (20) de fixation de la tête porte-outils (3) et d'un calculateur électronique (25), en boucle d'asservissement de recopie des angles mesurés par les capteurs angulaires (18, 20).

19. Porte-outils multifonctionnel selon la revendication 18, **caractérisé en ce que** l'extrémité proximale du bras de portage (2) est fixée à la partie haute du châssis porteur (1) par l'intermédiaire d'une liaison à double articulation, par exemple d'une liaison à cardan (17), dont les axes perpendiculaires sont munis, chacun, d'un capteur angulaire (18, 19), et **en ce que** l'extrémité distale dudit bras de portage est reliée à la tête porte-outils (3) par l'intermédiaire d'une liaison à double articulation, par exemple d'une liaison à cardan (20), deux vérins hydrauliques ou pneumatiques (26, 27) reliant également ladite extrémité distale et ladite tête porte-outils (3), ces vérins étant asservis, par l'intermédiaire de deux capteurs angulaires (23, 24) situés sur les deux axes du cardan (20) de fixation de la tête porte-outils (3), d'un calculateur électronique (25) et de deux électrodistributeurs, ou servodistributeurs, ou servovalves (28), en boucle d'asservissement de recopie des angles mesurés par les capteurs angulaires (18, 19).

20. Porte-outils multifonctionnel selon la revendication 19, **caractérisé en ce que** le porte-outils (3) est relié à l'extrémité distale du bras de portage (2) par une liaison à double articulation, par exemple d'une liaison à cardan (20) et par deux vérins hydrauliques à double effet (26, 27) et **en ce que** l'extrémité proximale du bras de portage (2) est reliée à la partie haute du châssis porteur (1) également par une liaison à double articulation, par exemple d'une liaison à cardan (17) et de deux vérins hydrauliques à double effet (29, 30) placés de sorte que l'un (29) se trouve actionné par les mouvements d'extension ou de rétraction du vérin de hauteur (11), c'est-à-dire par les mouvements du bras dans un plan vertical ou sensiblement vertical, tandis que l'autre (30) est actionné par les mouvements d'allongement ou de rétraction du vérin de déport (8), c'est-à-dire par les mouvements du bras dans un plan horizontal ou approximativement horizontal ; chaque vérin proximal (29 et 30) étant relié à un vérin distal (26, 27) par un circuit double de sorte que l'allongement d'un vérin proximal (29, 30) entraîne la rétraction du vérin distal (26, 27) auquel il est doublement relié, et vice-versa, de manière à constituer un parallélogramme hydraulique déformable.

21. Porte-outils multifonctionnel selon l'une des revendications 19 ou 20, **caractérisé en ce qu'**un accumulateur oleopneumatique (31) est connecté au vérin (27) assurant les mouvements de pivotement de la tête porte-outils (3) vers le bas ou vers le haut, cet accumulateur se trouvant en communication avec la chambre traversée par la tige dudit vérin.

## Claims

1. Multifunction tool-carrier fixable to the rear part of a carrier craft, for example behind an agricultural tractor, comprising a mounting chassis (1) the bottom part (1a-1e) of which is adapted to enable its removable or non-removable fixing and its positioning on a fixed rear element of the chassis of a carrier craft (T), independent of the rear three-point fixing system of said carrier craft (T), and conformed in such a manner as to provide free access to said rear three-point fixing system of the carrier craft, when the tool-carrier is installed thereon, this mounting chassis (1) including at least one carrier frame (1b-1c-1d) extending upward, at the rear of the tractor in the situation of mounting thereon, and at least one support structure (2) provided with a tool-carrier head (3) disposed at the free end of said support structure (2) and adapted to enable the interchangeable fixing of tools (M1, M2) intended for diverse agricultural tasks, this support structure (2) being connected to the upper part of said frame and oriented toward the front in relation to the direction of movement of the tool (M1, M2) suspended from said tool-carrier head (3), while working, said support structure (2) being adapted to enable, on the one hand, movement of the tool-carrier head (3) in three directions, that is to say: vertically (from top to bottom and vice-versa), laterally (from left to right and vice-versa), and longitudinally (from back to front and vice-versa), and, on the other hand, movement of said tool-carrier head (3) and the tool (M1, M2) suspended therefrom in a space situated at the front and/or on at least one of the sides of the tractor.

2. Multifunction tool-carrier according to claim 1, **characterised in that** the tool-carrier head (3) is secured to means ensuring auto-parallelism of the working axis of the tool (M1, M2) carried by said tool-carrier head (3) with the axis of the tractor (T).

3. Multifunction tool-carrier according to claim 1, **characterised in that** the tool-carrier head (3) is secured to two orthogonal cylinders operable manually and installed at the front of the support structure (2), these cylinders enabling parallelism of the working axis of the tool (M1, M2) carried by said tool-carrier head (3) with the axis of the tractor (T).

4. Multifunction tool-carrier according to any one of claims 1 to 3, **characterised in that** it includes two spaced independent support structures or arms (2) supported by the support element (1b, 1c, 1d) of the mounting chassis (1).

5. Multifunction tool-carrier according to any one of claims 1 to 4, **characterised in that** the bottom part (1a-1e) of the mounting chassis (1) is conformed in such a manner as to offer free access to the rear three-point fixing system (Ta) when the tool-carrier is installed on a tractor (T) equipped with such a fixing system.

6. Multifunction tool-carrier according to any one of claims 1 to 5, **characterised in that** the support structure comprises a support arm (2) including a proximal part (2a) fixed, by means of a perpendicular axes articulation (17) in the top part of said support element (1b, 1c, 1d) and at least one axially-mobile part (2b) and the distal end of which is provided with a tool-carrier head (3), said tool-carrier head also including means (8, 11) for pivoting said telescopic support arm (2) in perpendicular directions and means (16) for moving the sliding part (2b) of the latter toward the front or toward the rear.

7. Multifunction tool-carrier according to claim 6, **characterised in that** the support arm or arms (2) may be moved laterally in a space situated alongside the cab (C) or driver station of the tractor (T).

8. Multifunction tool-carrier according to claim 6, **characterised in that** the support arm or arms (2) may be moved laterally in a space situated above the cab (C) or driver station of the tractor (T).

9. Multifunction tool-carrier according to any one of claims 6 to 8, **characterised in that** the means for pivoting the extendable support arm (2) in a vertical or substantially vertical plane are constituted by a height cylinder (11) fixed by one of its ends and by means of an articulation (12) in the vicinity of the distal end of the pivoting fixing part (2a) of said support arm (2) and the other end of which is adapted to be fixed, also by means of an articulation (15), to a fixed lateral element of the chassis of the carrier craft (T).

10. Multifunction tool-carrier according to claim 9, **characterised in that** the height cylinder (11) is fixed to a flange (13) mounted and adjustable in position on the pivoting proximal part (2a) of the support arm (2).

11. Multifunction tool-carrier according to either of claims 9 or 10, **characterised in that** the height cylinder (11) is connected to the support arm (2) and to an attachment (14) for fixing it to a fixed lateral element of the chassis of the carrier craft, by means of ball-joint articulations (12, 15).

12. Multifunction tool-carrier according to any one of claims 1 to 11, **characterised in that** the extendable support arm (2) is constituted by a telescopic boom and the means providing for the entry and exit movements of the sliding element (2b) of said support arm comprise a cylinder (16) accommodated inside said telescopic boom and connecting the pivoting proximal part (2a) and the sliding distal part (2b) thereof.

13. Multifunction tool-carrier according to any one of claims 1 to 3 and 5 to 12, **characterised in that** it includes, at a distance from the support arm (2) and laterally relative thereto, a reinforcing framework (4) comprising an upper connecting arm (4a, 4b) oriented toward the front and a rigid fixing tie-rod (5) attached to the front end of said connecting arm and the lower end of which is provided with an attachment system (6) for fixing it to a fixed lower lateral element of the chassis of a tractor.

14. Multifunction tool-carrier according to claim 13, **characterised in that** the upper connecting arm (4) of the reinforcing framework is extendable, this arm being for example constituted of two tubular elements (4a, 4b) assembled telescopically, and/or **in that** the rigid fixing tie-rod (5) is adjustable.

15. Multifunction tool-carrier according to either of claims 13 or 14, **characterised in that** the fixing rigid tie-rod (5) is connected to the upper arm (4a, 4b) and to its lower attachment system (6) by means of ball-joint articulations (5a, 5b).

16. Multifunction tool-carrier according to any one of claims 1 to 15, **characterised in that** the top part (1b, 1c, 1d) of the mounting chassis (1) is produced in the form of an anti-overturning arch to the upper portion of which are fixed at a distance from each other the upper support arm (2) and the upper connecting arm (4) of the reinforcing framework or the two support arms (2a, 2b).

17. Multifunction tool-carrier according to any one of claims 6 to 12, **characterised in that** the ends of the support arm (2) are secured to a servo system comprising means (18, 19; 29, 30) for detecting angular movements of said support arm about its articulation axes in the top part of the chassis (1) and means (21, 22; 26, 27) ensuring auto-positioning of the tool-carrier head (3) as a function of the movements of said arm detected by said detection means.

18. Multifunction tool-carrier according to claim 17, **characterised in that** the proximal end of the support arm (2) is fixed to the top part of the support chassis (1) by means of a double-articulation connection, for example a universal joint connection (17), the perpendicular axes of which are each provided with an angular sensor (18, 19), and **in that** the distal end of said support arm is connected to the tool-carrier head (3) by means of a double-articulation connection, for example a universal joint connection (20), two electric cylinders (21, 22) also connecting said distal end and said tool-carrier head, these cylinders being controlled by means of two angular sensors (23, 24) situated on the two axes of the universal joint (20) for fixing the tool-carrier head (3) and an electronic computer (25) in a servo loop for copying the angles measured by the angular sensors (18, 20).

19. Multifunction tool-carrier according to claim 18, **characterised in that** the proximal end of the support arm (2) is fixed to the top part of the support chassis (1) by means of a double-articulation connection, for example a universal joint connection (17), the perpendicular axes of which are each provided with an angular sensor (18, 19), and **in that** the distal end of said support arm is connected to the tool-carrier head (3) by means of a double-articulation connection, for example a universal joint connection (20), two hydraulic or pneumatic cylinders (26, 27) also connecting said distal end and said tool-carrier head (3), these cylinders being controlled by means of two angular sensors (23, 24) situated on the two axes of the universal joint (20) for fixing the tool-carrier head (3), an electronic computer (25) and two electric distributors or servo distributors or servo valves (28) in a servo loop for copying the angles measured by the angular sensors (18, 19).

20. Multifunction tool-carrier according to claim 19, **characterised in that** the tool-carrier (3) is connected to the distal end of the support arm (2) by a double-articulation connection, for example a universal joint connection (20), and by two double-acting hydraulic cylinders (26, 27), and **in that** the proximal end of the support arm (2) is connected to the top part of the support chassis (1) also by a double-articulation connection, for example a universal joint connection (17), and two double-acting hydraulic cylinders (29, 30) placed so that one of them (29) is actuated by extension or retraction movements of the height cylinder (11), that is to say by movements of the arm in a vertical or substantially vertical plane, whereas the other one (30) is actuated by movements of extension or retraction of the pivoting cylinder (8), that is to say by movements of the arm in a horizontal or approximately horizontal plane; each proximal cylinder (29 and 30) being connected to a distal cylinder (26, 27) by a double circuit so that the extension of a proximal cylinder (29, 30) drives retraction of the distal cylinder (26, 27) to which it is doubly connected and vice-versa in such a manner as to constitute a deformable hydraulic parallelogram.

21. Multifunction tool-carrier according to either of claims 19 or 20, **characterised in that** an oleopneumatic accumulator (31) is connected to the cylinder (27) providing the downward or upward pivoting movements of the tool-carrier head (3), this accumulator being in communication with the chamber through which the rod of said cylinder passes.

## Patentansprüche

1. Werkzeughalter mit mehreren Funktionen, der an der Rückseite einer Trägermaschine befestigt ist, beispielsweise an der Rückseite eines Landwirtschaftstraktors, enthaltend einen Montagerahmen (1), dessen unterer Teil (1a - 1e) so angeordnet ist, dass er seine abnehmbare oder nicht abnehmbare Befestigung und seine Positionierung auf einem festen rückwärtigen Element des Rahmens einer Trägermaschine (T) gestattet, der unabhängig vom rückwärtigen Dreipunkt-Befestigungssystem der Trägermaschine (T) ist, und der so ausgebildet ist, dass er den Zugang zum rückwärtigen Dreipunkt-Befestigungssystem der Trägermaschine freigibt, wenn der Werkzeughalter auf der Letzteren installiert ist, wobei dieser Montagerahmen (1) mindestens einen Tragrahmen (1b - 1c - 1d), der sich hinter dem Traktor in Montagesituation an diesem Letzteren nach oben erstreckt, und mindestens eine Tragstruktur (2) umfasst, die mit einem Werkzeughalterkopf (3) ausgestattet ist, der an dem freien Ende der Tragstruktur (2) angeordnet ist und so eingerichtet ist, dass die auswechselbare Befestigung von Werkzeugen (M1, M2) ermöglicht wird, die für verschiedene landwirtschaftliche Arbeiten bestimmt sind, wobei diese Tragstruktur (2) mit dem oberen Teil des Rahmens verbunden und unter Berücksichtigung der Bewegungsrichtung des während der Arbeit an dem Werkzeughalter (3) aufgehängten Werkzeugs (M1, M2) nach vorne ausgerichtet ist, wobei die Tragstruktur (2) so eingerichtet ist, dass sie einerseits Bewegungen des Werkzeughalterkopfs (3) in drei Richtungen gestattet, d.h. vertikal (von oben nach unten und umgekehrt), seitlich (von links nach rechts und umgekehrt) und der Länge nach (von hinten nach vorne und umgekehrt), und andererseits die Bewegung des Werkzeughalterkopfs (3) und des daran aufgehängten Werkzeugs (M1, M2), in einem Raum gestattet, der sich vor und/oder auf mindestens einer der Seiten des Traktors befindet.

2. Werkzeughalter mit mehreren Funktionen nach Anspruch 1, **dadurch gekennzeichnet, dass** der Werkzeughalterkopf (3) Mitteln unterworfen ist, die die automatische Parallelität der Arbeitsachse des von dem Werkzeughalterkopf (3) getragenen Werkzeugs (M1, M2) mit der Achse des Traktors (T) sicherstellen.

3. Werkzeughalter mit mehreren Funktionen nach Anspruch 1, **dadurch gekennzeichnet, dass** der Werkzeughalterkopf (3) zwei manuell steuerbaren und vor der Tragstruktur (2) installierten orthogonalen Zylindern unterworfen ist, welche Zylinder gestatten, die Parallelität der Arbeitsachse des von dem Werkzeughalterkopf getragenen (3) Werkzeugs (M1, M2) mit der Achse des Traktors (T) sicherzustellen.

4. Werkzeughalter mit mehreren Funktionen nach einem der Ansprüche 1 bis 3, **dadurch gekennzeichnet, dass** er zwei unabhängige, voneinander beabstandete und durch das Tragelement (1b, 1c, 1d) des Montagerahmens (1) getragene Tragstrukturen oder -arme (2) aufweist.

5. Werkzeughalter mit mehreren Funktionen nach einem der Ansprüche 1 bis 4, **dadurch gekennzeichnet, dass** der untere Teil (1a - 1e) des Montagerahmens (1) so ausgebildet ist, dass er den Zugang zum rückwärtigen Dreipunkt-Befestigungssystem (Ta) freigibt, wenn der Werkzeughalter auf einem Traktor (T) installiert ist, der mit einem derartigen Befestigungssystem ausgestattet ist.

6. Werkzeughalter mit mehreren Funktionen nach einem der Ansprüche 1 bis 5, **dadurch gekennzeichnet, dass** die Tragstruktur einen Tragarm (2), der einen proximalen, mittels einer Gelenkverbindung mit senkrechten Achsen (17) am oberen Teil des Tragelements (1b - 1c - 1d) befestigten Teil (2a) und mindestens einen axial beweglichen Teil (2b) aufweist, deren distales Ende mit einem Werkzeughalterkopf (3) ausgestattet ist, wobei der Werkzeughalterkopf ebenfalls Mittel (8, 11) aufweist, die das Schwenken des Teleskop-Tragarms (2) in den senkrechten Richtungen sicherstellen, und Mittel (16), die die Bewegungen des gleitenden Teils (2b) des Letzteren nach vorne oder nach hinten sicherstellen.

7. Werkzeughalter mit mehreren Funktionen nach Anspruch 6, **dadurch gekennzeichnet, dass** der bzw. die Tragarme (2) sich seitlich in einem Raum bewegen kann bzw. bewegen können, der sich auf der Seite der Kabine (C) oder des Leitstands des Traktors (T) befindet.

8. Werkzeughalter mit mehreren Funktionen nach Anspruch 6, **dadurch gekennzeichnet, dass** der Tragarm bzw. die Tragarme (2) sich seitlich in einem Raum bewegen kann bzw. bewegen können, der sich über der Kabine (C) oder dem Leitstand des Traktors (T) befindet.

9. Werkzeughalter mit mehreren Funktionen nach einem der Ansprüche 6 bis 8, **dadurch gekennzeichnet, dass** die Mittel, die das Schwenken des ausfahrbaren Tragarms (2) in einer vertikalen oder im Wesentlichen vertikalen Ebene sicherstellen, aus einem Höhenzylinder (11) gebildet werden, der über eines seiner Enden und mittels einer Gelenkverbindung (12) in der Nähe des distalen Endes des schwenkbaren Befestigungsteils (2a) des Tragarms (2) befestigt ist, und dessen anderes Ende so eingerichtet ist, dass es ebenfalls mittels einer Gelenkverbindung (15) an einem seitlichen festen Element des Rahmens der Trägermaschine (T) befestigt werden kann.

10. Werkzeughalter mit mehreren Funktionen nach Anspruch 9, **dadurch gekennzeichnet, dass** der Höhenzylinder (11) an einer Bügellasche (13) mit verstellbarer Position befestigt ist, die auf dem proximalen schwenkbaren Teil (2a) des Tragarms (2) montiert ist.

11. Werkzeughalter mit mehreren Funktionen nach einem der Ansprüche 9 oder 10, **dadurch gekennzeichnet, dass** der Höhenzylinder (11) mit dem Tragarm (2) und mit einer Befestigungsklammer (14) mit einem seitlichen festen Element des Rahmens der Trägermaschine mittels einer Kugelgelenkverbindung (12, 15) verbunden ist.

12. Werkzeughalter mit mehreren Funktionen nach einem der Ansprüche 1 bis 11, **dadurch gekennzeichnet, dass** der ausfahrbare Tragarm (2) aus einem Teleskopausleger gebildet ist und die Mittel, die die Einfahr- und Ausfahrbewegungen des Gleitelements (2b) des Tragarms sicherstellen, einen Zylinder (16) umfassen, der im Inneren des Teleskopauslegers angeordnet ist und den proximalen schwenkbaren Teil (2a) und den distalen gleitenden Teil (2b) dieses Letzteren miteinander verbindet.

13. Werkzeughalter mit mehreren Funktionen nach einem der Ansprüche 1 bis 3 und 5 bis 11, **dadurch gekennzeichnet, dass** er mit Abstand zum Tragarm (2) und seitlich in Bezug auf diesen Letzteren eine Verstärkungskonstruktion (4) aufweist, die einen oberen Verbindungsarm (4a - 4b) umfasst, der nach vorne ausgerichtet ist, und einen starren Befestigungsankerbolzen (5), der am vorderen Ende des Verbindungsarms angebracht ist und dessen unteres Ende mit einem Befestigungssystem (6) ausgestattet ist, das es ermöglicht, ihn an einem seitlichen unteren festen Element des Rahmens eines Traktors zu befestigen.

14. Werkzeughalter mit mehreren Funktionen nach Anspruch 13, **dadurch gekennzeichnet, dass** der obere Verbindungsarm (4) der Verstärkungskonstruktion ausfahrbar ist, wobei dieser Arm zum Beispiel aus zwei rohrförmigen Elementen (4a, 4b) gebildet wird, die teleskopartig zusammengebaut sind, und/oder **dadurch**, dass der starre Befestigungsankerbolzen (5) verstellbar ist.

15. Werkzeughalter mit mehreren Funktionen nach einem der Ansprüche 13 oder 14, **dadurch gekennzeichnet, dass** der starre Befestigungsankerbolzen (5) mit dem oberen Arm (4a - 4b) und mit seinem unteren Befestigungssystem (6) mittels Kugelgelenkverbindungen (5a, 5b) verbunden ist.

16. Werkzeughalter mit mehreren Funktionen nach einem der Ansprüche 1 bis 15, **dadurch gekennzeichnet, dass** der obere Teil (1b, 1c, 1d) des Montagerahmens (1) in Form eines Überrollbügels ausgeführt ist, an dessen oberem Teil und voneinander beabstandet der obere Tragarm (2) und der obere Verbindungsarm (4) der Verstärkungskonstruktion oder die zwei Tragarme (2A, 2B) befestigt sind.

17. Werkzeughalter mit mehreren Funktionen nach einem der Ansprüche 6 bis 12, **dadurch gekennzeichnet, dass** die Enden des Tragarms (2) einem Steuersystem unterworfen sind, das Mittel (18, 19; 29, 30) zum Erfassen von Winkelbewegungen des Tragarms um seine Gelenkachsen im oberen Teil des Rahmens (1) und der Mittel (21, 22; 26, 27) umfasst, die die automatische Positionierung des Werkzeughalterkopfs (3) in Abhängigkeit von den Bewegungen des Arms sicherstellen, die durch die Erfassungsmittel festgestellt werden.

18. Werkzeughalter mit mehreren Funktionen nach Anspruch 17, **dadurch gekennzeichnet, dass** das proximale Ende des Tragarms (2) am oberen Teil des Trägerrahmens (1) mittels einer Doppelgelenkverbindung befestigt ist, beispielsweise einer Kardanverbindung (17), deren senkrechte Achsen jeweils mit einem Winkelsensor (18, 19) ausgestattet sind, und **dadurch**, dass das distale Ende des Tragarms mit dem Werkzeughalterkopf (3) mittels einer Doppelgelenkverbindung verbunden ist, beispielsweise einer Kardanverbindung (20), wobei zwei Elektrozylinder (21, 22) das distale Ende und den Werkzeughalterkopf ebenfalls verbinden, wobei diese Zylinder mithilfe von zwei Winkelsensoren (23, 24), die sich auf den zwei Kardanachsen (20) zur Befestigung des Werkzeughalterkopfs (3) befinden, und eines elektronischen Rechners (25) in einer Rückmeldungs-Regelschleife der von den Winkelsensoren (18, 20) gemessenen Winkel gesteuert werden.

19. Werkzeughalter mit mehreren Funktionen nach Anspruch 18, **dadurch gekennzeichnet, dass** das proximale Ende des Tragarms (2) am oberen Teil des Trägerrahmens (1) mittels einer Doppelgelenkverbindung befestigt ist, beispielsweise einer Kardanverbindung (17), deren senkrechte Achsen jeweils mit einem Winkelsensor (18, 19) ausgestattet sind, und **dadurch**, dass das distale Ende des Tragarms mit dem Werkzeughalterkopf (3) mittels einer Doppelgelenkverbindung verbunden ist, beispielsweise einer Kardanverbindung (20), wobei zwei Hydraulik- oder Druckluftzylinder (26, 27) ebenfalls das distale Ende und den Werkzeughalterkopf (3) verbinden, wobei diese Zylinder mithilfe von zwei Winkelsensoren (23, 24), die sich auf den zwei Kardanachsen (20) zur Befestigung des Werkzeughalterkopfs (3) befinden, eines elektronischen Rechners (25) und von zwei Elektroverteilern oder Servoverteilern oder Servoventilen (28) in einer Rückmeldungs-Regelschleife der von den Winkelsensoren (18, 19) gemessen Winkel gesteuert werden.

20. Werkzeughalter mit mehreren Funktionen nach Anspruch 19, **dadurch gekennzeichnet, dass** der Werkzeughalter (3) mit dem distalen Ende des Tragarms (2) mittels einer Doppelgelenkverbindung verbunden ist, beispielsweise einer Kardanverbindung (20), und mit zwei doppeltwirkenden Hydraulikzylindern (26, 27), und **dadurch**, dass das proximale Ende des Tragarms (2) mit dem oberen Teil des Trägerrahmens (1) ebenfalls mittels einer Doppelgelenkverbindung verbunden ist, beispielsweise mit einer Kardanverbindung (17) und zwei doppeltwirkenden Hydraulikzylindern (29, 30), die so positioniert sind, dass einer (29) durch die Ausfahr- und Einfahrbewegungen des Höhenzylinders (11) betätigt wird, d.h. durch die Bewegungen des Arms in einer vertikalen oder im Wesentlichen vertikalen Ebene, während der andere (30) durch die Verlängerungs- und Einfahrbewegungen des Verschiebezylinders (8) betätigt wird, d. h. durch die Bewegungen des Arms in einer horizontalen oder im Wesentlichen horizontalen Ebene; wobei jeder proximale Zylinder (29 und 30) mit einem distalen Zylinder (26, 27) über einen doppelten Schaltkreis so verbunden ist, dass die Verlängerung eines proximalen Zylinders (29, 30) das Einfahren des distalen Zylinders (26, 27) nach sich zieht, mit dem er doppelt verbunden ist, und umgekehrt, so dass ein hydraulisch verformbares Parallelogramm gebildet wird.

21. Werkzeughalter mit mehreren Funktionen nach einem der Ansprüche 19 oder 20, **dadurch gekennzeichnet, dass** ein Öl-Druckluftspeicher (31) an den Zylinder (27) angeschlossen ist, der die Schwenkbewegungen des Werkzeughalterkopfs (3) nach unten oder nach oben sicherstellt, wobei dieser Speicher mit der Kammer in Verbindung steht, die von der Stange des Zylinders durchquert wird.
